Europäisches Patentamt

European Patent Office

Office européen des brevets

(11) Numéro de publication : **0 172 082 B1**

(12) **FASCICULE DE BREVET EUROPÉEN**

(45) Date de publication du fascicule du brevet :
21.12.88

(51) Int. Cl.⁴ : **C 04 B 35/80**

(21) Numéro de dépôt : **85401477.6**

(22) Date de dépôt : **18.07.85**

(54) **Procédé de fabrication d'un matériau composite à renfort fibreux réfractaire et matrice céramique, et structure telle qu'obtenue par ce procédé.**

(30) Priorité : **20.07.84 FR 8411591**

(43) Date de publication de la demande :
**19.02.86 Bulletin 86/08**

(45) Mention de la délivrance du brevet :
**21.12.88 Bulletin 88/51**

(84) Etats contractants désignés :
**DE GB**

(56) Documents cités :
FR-A- 2 401 888
FR-A- 2 520 730
US-A- 4 275 095
CHEMICAL ABSTRACTS, vol. 100, no. 12, mars 1984, page 279, réf. no. 90230k, Columbus, Ohio, US; H. HANNACHE et al.: "Composite materials made from a porous 2D-carbon-carbon preform densified with boron nitride by chemical vapor infiltration"

(73) Titulaire : **SOCIETE EUROPEENNE DE PROPULSION (S.E.P.) Société Anonyme dite:**
**24 Rue Salomon de Rothschild**
**F-92150 Suresnes (FR)**

(72) Inventeur : **Thebaut, Jacques Georges**
**100, rue Etchenique**
**F-33200 Boordeaux (FR)**

(74) Mandataire : **Joly, Jean-Jacques et al**
**CABINET BEAU DE LOMENIE 55, rue d'Amsterdam**
**F-75008 Paris (FR)**

EP 0 172 082 B1

# 0 172 082

## Description

La présente invention concerne notamment un procédé de fabrication d'un matériau composite à renfort fibreux réfractaire et à matrice céramique autre qu'en carbone, formée par infiltration (par exemple infiltration chimique en phase gazeuse) au sein de la porosité du renfort fibreux.

Par fibres réfractaires, on entend toutes les fibres susceptibles de supporter sans modification ou dégradation fondamentale une température d'au moins 800 °C sous une atmosphère non réactive avec la fibre — par exemple fibres de carbone, de carbure de silicium, d'alumine, etc.

Par matrice céramique, on entend toute composition réfractaire de type oxyde, carbure, borure, nitrure, etc. à l'exception du carbone. Sont donc exclus du champ de ce brevet les matériaux composites de type carbone-carbone.

Par infiltration chimique en phase gazeuse (CVI), on entend l'opération conduisant à un dépôt d'épaisseur quasi homogène au sein de la porosité, accessible aux gaz, d'un matériau poreux. Pour l'homme de l'art, l'opposé de l'infiltration est le dépôt de surface.

Un procédé de fabrication d'un matériau composite à matrice en carbure de silicium est décrit dans le brevet US-A-4 275 095. Le renfort fibreux est muni d'un revêtement de pyrocarbone, déposé en phase vapeur, avant d'être mis au contact de silicium fondu pour former du carbure de silicium par réaction avec le pyrocarbone, le but recherché étant d'obtenir une décohésion entre le renfort fibreux et la matrice pour que les fibres soient libres de bouger par rapport à la matrice. La formation de la matrice peut être complétée par dépôt de carbure de silicium en phase vapeur.

Un autre procédé de fabrication d'un matériau composite à matrice céramique est décrit dans le document FR-A-2 401 888. On trouve notamment dans ce document des indications quant aux conditions d'infiltration en phase vapeur de matériaux céramiques, tels que le carbure de silicium. La formation de matériaux composites à matrice mixte, par exemple pour partie pyrocarbone et pour partie carbure de silicium est également envisagée.

Un autre type de matériau composite à matrice mixte est mentionné dans « Chemical Abstracts », Vol. 100, No 12, réf. 90230k, le matériau céramique déposé sur un substrat en fibres de carbone préalablement densifié par du pyrocarbone étant du nitrure de bore.

D'une façon générale, dans les matériaux composites à matrice céramique, celle-ci, en raison de son caractère céramique, a un faible allongement à la rupture, une mauvaise résistance en traction et une grande sensibilité à l'entaille. L'obtention d'un matériau peu sensible aux chocs et à la propagation des fissures initiées par le moindre défaut requiert une liaison fibre-matrice faible. Mais alors, le matériau n'est pas résistant par constitution puisqu'il est connu que l'obtention de matériaux composites aux propriétés mécaniques élevées nécessite une forte liaison entre la texture de renfort et la matrice.

Pour résoudre ce dilemme, il a été proposé d'utiliser pour la texture de renfort des fibres dites « duplex » comportant une fibre centrale, ou âme, résistante mécaniquement, entourée par une gaine concentrique également résistante mécaniquement. La gaine est fortement liée à la matrice, apportant ainsi la résistance mécanique, mais est faiblement liée à l'âme pour permettre, en cas de rupture dans la texture, une absorption d'énergie par décohésion entre la fibre centrale et la gaine de revêtement la renforçant. La gaine et l'âme constituent deux fibres — une pleine et l'autre creuse — ayant des fonctions spécifiques mais participant toutes deux à la résistance mécanique du matériau final.

La présente invention a pour but de résoudre ce même problème de façon différente et simple à mettre en œuvre.

Ce but est atteint au moyen d'un procédé du type selon lequel on forme une texture de renfort à partir de fibres d'un matériau réfractaire, on forme sur les fibres de la texture de renfort un revêtement intermédiaire obtenu par dépôt en phase vapeur, et on forme ensuite la matrice céramique par mise en place d'un matériau céramique sur les fibres de la texture munies du revêtement intermédiaire, procédé dans lequel, conformément à l'invention :

le revêtement intermédiaire est formé par dépôt d'une mince couche intermédiaire en un matériau ayant un allongement à la rupture supérieur à celui du matériau céramique de la matrice et étant élastiquement déformable au moins en cisaillement, la couche intermédiaire ayant une épaisseur comprise entre 0,2 et 3 micromètres et adhérant aux fibres de la texture de renfort, et

la matrice est formée par dépôt sur la couche intermédiaire d'un matériau céramique obtenu sans réaction chimique avec le matériau de la couche intermédiaire, le matériau céramique adhérant à la couche intermédiaire, de sorte qu'une couche de liaison intermédiaire à caractère élastique est formée entre les fibres et la matrice.

En raison de la structure en feuillets de la couche intermédiaire, cet allongement est mesuré en cisaillement, parallèlement aux feuillets et en traction-compression perpendiculairement aux feuillets.

Grâce à son caractère élastique marqué la couche intermédiaire permet une relaxation des contraintes à fond de fissure lorsqu'une fissure de la matrice arrive au voisinage de la fibre. Si le niveau de contrainte à fond de fissure est inférieur à la contrainte à rupture locale de la couche intermédiaire, la fissure est arrêtée. Sinon, la fissure se propage (avec absorption d'énergie) jusqu'à la fibre suivante, mais cette fissure, compte-tenu des propriétés anisotropes de la couche intermédiaire, peut être déviée ou se propager sans induire nécessairement la rupture de la fibre.

2

Ainsi, la couche intermédiaire réduit la sensibilité à la propagation des fissures et augmente la résistance aux chocs. De plus, en raison de la bonne liaison de la couche intermédiaire avec, à la fois, les fibres de la texture de renfort et la matrice, il est possible d'obtenir des propriétés mécaniques élevées. On notera que la formation d'une telle couche intermédiaire conduit à une structure qui se distingue bien de celle à fibres « duplex » de l'art antérieur puisque l'élément intermédiaire à structure lamellaire n'a pas intrinsèquement le rôle de renfort.

Le matériau de la couche intermédiaire est déposé sur les fibres par infiltration chimique en phase vapeur. Il s'agit par exemple de pyrocarbone laminaire ou de nitrure de bore qui sont tous deux des matériaux anisotropes de structure cristallographique lamellaire ou en feuillets faiblement liés entre eux et orientés suivant les fibres du fait du dépôt par infiltration chimique en phase vapeur. Ces matériaux présentent d'importantes propriétés de déformation élastique en compression, perpendiculairement aux feuillets et en cisaillement, parallèlement aux feuillets, et confèrent ainsi une pseudo-plasticité macroscopique au matériau composite.

L'invention a aussi pour objet un matériau composite tel que celui obtenu par le procédé ci-dessus, c'est-à-dire un matériau composite à renfort fibreux et matrice céramique dans lequel, conformément à l'invention, une mince couche adhérente intermédiaire réfractaire à structure en feuillets est déposée sur les fibres du renfort par infiltration chimique en phase gazeuse, cette couche intermédiaire ayant un allongement à la rupture au moins supérieur à celui de la matrice et ayant une épaisseur comprise entre 0,2 et 3 micromètres.

Des exemples de mise en œuvre du procédé selon l'invention sont donnés ci-après à titre indicatif mais non limitatif.

## Exemple 1

Une texture de renfort est réalisée par enroulement-compactage à sec d'un tissu à base de fibres de carbone à hautes caractéristiques mécaniques commercialisées par la Société Japonaise Toray sous la dénomination « T 300 » pour obtenir une préforme ayant un taux volumique de fibres égal à 50 %. Cette texture sèche, maintenue dans un outillage, est soumise à une infiltration chimique en phase gazeuse de pyrocarbone laminaire de grand allongement à rupture. Un tel pyrocarbone est obtenu par infiltration à partir, par exemple, de gaz méthane ($CH_4$) sous pression réduite (10 torrs 13,3 mbar) à une température de 1 050 °C. Cette préforme, toujours tenue dans son outillage, est ensuite infiltrée à cœur et totalement densifiée par une matrice de carbure de silicium obtenue par infiltration chimique en phase gazeuse suivant une technique connue en elle-même. Le résultat final obtenu est un matériau composite à fibres carbone-pyrocarbone laminaire et à matrice carbure de silicium.

Le tableau 1 ci-après donne les résultats d'essais effectués sur des éprouvettes différentes obtenues en faisant varier la durée de dépôt de pyrocarbone laminaire, donc l'épaisseur du revêtement intermédiaire. Les éprouvettes se présentaient sous forme de cylindres de diamètre égal à 10 mm et de longueur égale à 100 mm. A titre de comparaison, on a fait figurer dans le tableau 1 les résultats d'essais effectués sur un matériau composite de type carbone-carbure de silicium (pas de dépôt intermédiaire de pyrocarbone laminaire — essai N° 1 —) et un matériau composite de type carbone-carbone (matrice entièrement en pyrocarbone laminaire — essai N° 6 —).

Les caractéristiques mesurées ont été l'épaisseur (e) de la couche intermédiaire de pyrocarbone laminaire, la contrainte en rupture en flexion 3 points ($\sigma F$ 3 points), le module d'élasticité apparent ($E_o$), la contrainte à rupture en compression ($\sigma C$) et la résistance au choc.

Tableau 1

| No | e ($\mu$m) | $\sigma F$(MPa) 3 points | $E_o$(GPa) | $\sigma C$(MPa) | choc (daN x cm) |
|---|---|---|---|---|---|
| 1 | 0 | 62 | 155 | 405 | 3 |
| 2 | 0,2 | 415 | 132 | 583 | 12 |
| 3 | 0,7 | 780 | 128 | 527 | 16 |
| 4 | 1,5 | 794 | 118 | 570 | >40 |
| 5 | 10 | 680 | 75 | 360 | >40 |
| 6 | matrice pyrocarbone | 660 | 77 | 395 | >40 |

Les essais 3 et 4 donnent les meilleurs résultats. On note en particulier que de très bonnes propriétés mécaniques, supérieures à celles du composite à matrice entièrement en pyrocarbone, sont obtenues en combinaison avec une excellente tenue au choc.

L'épaisseur de la couche intermédiaire doit dépasser un certain minimum pour obtenir de bons résultats. A cet égard, une épaisseur d'au moins 0,2 μm parait nécessaire. Au-delà d'une certaine épaisseur, l'on obtient en fait non pas un composite à fibres carbone-pyrocarbone et matrice SiC, mais un composite à fibres carbone et matrice mixte pyrocarbone-SiC et les résultats se dégradent (voir essai N° 5). Cette limite supérieure dépend dans une certaine mesure de la taille des porosités ; d'une façon générale il ne paraît pas souhaitable de dépasser 3 μm d'épaisseur pour la couche lamellaire.

Les résultats montrent également que les propriétés obtenues sont dues à l'effet de liaison mécanique élastique et non pas à un effet de décohésion préférentiel entre les fibres et leurs gaines car, alors, on obtiendrait les mêmes valeurs quelle que soit l'épaisseur de la couche intermédiaire. Cela est également confirmé par l'excellente tenue du matériau à la fatigue, puisqu'une éprouvette identique à celles de l'essai N° 4 a subi sans rupture $10^6$ cycles de déformation à 80 % de σF en présentant ensuite une déformation permanente, ce qui montre bien que la fissuration, à terme inéluctable, de la matrice n'induit pas la rupture immédiate du matériau.

## Exemple 2

Une texture de renfort est réalisée par empilement à plat de strates de tissu de fibres de carbone à haute résistance mécanique. Cette texture est compactée à sec pour obtenir une préforme ayant un taux volumique de fibres égal à 50 %. Cette texture sèche, maintenue dans un outillage est soumise à une infiltration chimique en phase gazeuse de pyrocarbone laminaire pour former sur les fibres une couche intermédiaire d'épaisseur environ égale à 1,5 μm. Ensuite, la préforme, toujours maintenue dans l'outillage est densifiée à cœur par infiltration chimique en phase gazeuse de carbure de silicium.

Le tableau 2 donne les valeurs mesurées de la contrainte à rupture en flexion 4 points (σF 4 points) et du module d'élasticité apparent, les mesures ayant été effectuées sur des éprouvettes parallélépipédiques de longueur 70 mm, largeur 9,5 mm et épaisseur 2,5 mm. Les valeurs mesurées sur des éprouvettes de composite carbone-carbure de silicium obtenues de la même façon, à l'exception du dépôt intermédiaire de pyrocarbone laminaire, sont données à titre de comparaison.

### Tableau 2

| épaisseur de pyrocarbone (μm) | σF 4 points (MPa) | $E_o$ (GPa) |
|---|---|---|
| 0 | 384 – 409 – 214 | 145 – 150 |
| 1,5 | 533 – 538 – 526 | 120 – 130 |

## Exemple 3

On procède comme dans l'exemple 2 en substituant au tissu de carbone à haute résistance un tissu à haut module à base de fibres de carbone commercialisées par la Société Japonaise Toray sous la dénomination « M40 », et en mesurant la contrainte à rupture en flexion 3 points sur des éprouvettes de mêmes dimensions. Les valeurs mesurées sont :

| épaisseur de pyrocarbone (μm) | σF 3 points (MPa) |
|---|---|
| 0 | 166 – 101 – 169 – 138 |
| 1,5 | 355 – 252 – 350 |

4

**0 172 082**

### Exemple 4

On procède comme dans l'exemple 3 en substituant un tissu de carbure de silicium constitué à partir de fibres « Nicalon » de la société japonaise NIPPON CARBON, à la place du tissu de carbone et en partant d'une préforme avec un taux volumique de fibres égal à 40 %. Les valeurs mesurées sont :

#### Tableau 4

| épaisseur de pyrocarbone ($\mu$m) | $\sigma F$ 3 points (MPa) |
|---|---|
| 0 | 151 – 133 – 157 – 186 |
| 1,5 | 317 – 374 – 343 – 337 |
| | 388 – 340 |

Il est intéressant de noter (exemples 2, 3, et 4) que la présence d'une couche intermédiaire non seulement conduit à des propriétés mécaniques plus élevées mais aussi réduit sensiblement la dispersion des valeurs des caractéristiques mécaniques et par suite augmente le module de Weibull ; cela s'avère particulièrement avantageux en ce qui concerne le dimensionnement et l'utilisation du matériau composite obtenu. On relèvera également que l'amélioration des propriétés mécaniques n'est pas conditionnée par la nature des fibres de la texture de renfort.

### Exemple 5

On réalise un matériau tel que décrit dans l'exemple 4 mais on remplace la couche intermédiaire de pyrocarbone par du nitrure de bore (BN) pyrolytique obtenu par infiltration chimique en phase vapeur à 1 150 °C, sous une pression totale de 0,026 atm. en utilisant comme gaz réactif de l'ammoniac (NH3) et du trifluorure de bore (BF3) dans un rapport NH3/BF3 = 1,4. La durée d'infiltration est limitée à l'obtention d'une couche de 1,5 $\mu$m de BN.

On obtient donc, après infiltration par du SiC, un matériau SiC (Bn)-SiC. Le matériau ainsi obtenu est résistant mécaniquement et de plus ne présente pas une rupture de type fragile, contrairement au même matériau élaboré sans couche intermédiaire de BN.

Si l'on place ce matériau pendant 25 heures en atmosphère oxydante (air) dans un four à 1 000 °C, on observe que le poids de l'échantillon n'a pas varié significativement et que le matériau est toujours résistant et a toujours une rupture de type non fragile.

Si l'on effectue ce même traitement d'oxydation sur un matériau tel que décrit dans l'exemple 4, on observe par contre une perte de poids due à l'oxydation du pyrocarbone et le matériau voit ses propriétés mécaniques chuter notablement, bien que son mode de rupture reste de type non fragile.

Cet exemple montre l'intérêt qu'il y a à utiliser une couche intermédiaire de BN lamellaire dans le cas des utilisations en atmosphère oxydante de composites à fibres et à matrices inoxydables.

### Exemple 6

On réalise un matériau tel que décrit dans l'exemple 2 mais on utilise un arrangement multidirectionnel (3D dans l'exemple présent) de fibres de carbone.

Dans le matériau C (Pyro C)-SiC ainsi élaboré on usine des éprouvettes de flexion 3 points de diamètre 10 mm et longueur 100 mm.

Le tableau 5 donne les résultats obtenus, comparés avec ceux d'éprouvettes de mêmes dimensions en un matériau C-SiC de l'art antérieur.

(Voir Tableau 5 page 6)

5

Tableau 5

|  | : e (μm) : pyrocarbone | : σF 3 points : (MPa) | : $E_O$ : (GPa) |
|---|---|---|---|
| Selon l'art antérieur | : 0 | : // 127 | : 150 |
|  | : 0 | : ⊥ 117 | : 130 |
| Selon la présente invention | : 1,5 | : // 380 | : 105 |
|  | : 1,5 | : ⊥ 340 | : 100 |

Cet exemple montre que l'interposition d'une couche élastique — pyrocarbone dans ce cas — améliore également les propriétés mécaniques de matériaux à texture multidirectionnelle et ce aussi bien selon une des directions du renfort fibreux (signe //) que perpendiculairement (signe ⊥).

Dans les exemples qui précèdent, la matrice est élaborée par infiltration chimique en phase vapeur. D'autres méthodes d'élaboration de la matrice sont envisageables et existent, sans remettre en cause la présente invention relative à l'interposition d'une couche à caractère élastique marqué entre la fibre et la matrice. Ainsi, la matrice peut être en totalité ou en partie obtenue par décomposition thermique d'un composé liquide ou fusible imprégnant le renfort fibreux, celui-ci étant préalablement revêtu de la couche intermédiaire lamellaire, par exemple en pyrocarbone ou nitrure de bore, conformément à l'invention.

A titre d'illustration, une matrice de SiC peut être élaborée à partir d'un polycarbosilane fondu ou en solution, qui imprègne un renfort fibreux préalablement traité selon l'invention. La thermolyse de ce polycarbosilane conduit à la matrice SiC en un ou plusieurs cycles d'imprégnation-thermolyse.

De façon similaire, la matrice peut être élaborée à partir d'alcoolates métalliques qui conduisent à une matrice oxyde par décomposition d'un gel intermédiaire (par exemple un butylate d'aluminium conduira à une matrice d'alumine).

## Revendications

1. Procédé de fabrication d'un matériau composite à renfort fibreux réfractaire et à matrice céramique autre qu'en carbone, procédé selon lequel on forme une texture de renfort à partir de fibres d'un matériau réfractaire, on forme sur les fibres de la texture de renfort un revêtement intermédiaire obtenu par dépôt en phase vapeur, et on forme ensuite la matrice céramique par mise en place d'un matériau céramique sur les fibres de la texture munies du revêtement intermédiaire, caractérisé en ce que :
- le revêtement intermédiaire est formé par dépôt d'une mince couche intermédiaire en un matériau ayant un allongement à la rupture supérieur à celui du matériau céramique de la matrice et étant élastiquement déformable au moins en cisaillement, la couche intermédiaire ayant une épaisseur comprise entre 0,2 et 3 micromètres et adhérant aux fibres de la texture de renfort, et
- la matrice est formée par dépôt sur la couche intermédiaire d'un matériau céramique obtenu sans réaction chimique avec le matériau de la couche intermédiaire, le matériau céramique adhérant à la couche intermédiaire, de sorte qu'une couche de liaison intermédiaire à caractère élastique est formée entre les fibres et la matrice.

2. Procédé selon la revendication 1, caractérisé en ce que la couche intermédiaire est formée par dépôt chimique en phase vapeur d'un matériau choisi parmi le pyrocarbone laminaire et le nitrure de bore.

3. Procédé selon l'une quelconque des revendications 1 et 2, caractérisé en ce que la texture de renfort est formée à partir de fibres choisies parmi les fibres de carbone et les fibres de carbure de silicium.

4. Procédé selon l'une quelconque des revendications 1 à 3, caractérisé en ce que la matrice céramique est formée par du carbure de silicium.

5. Procédé selon l'une quelconque des revendications 1 à 4, caractérisé en ce que la matrice céramique est formée par dépôt chimique en phase vapeur dudit matériau céramique.

6. Procédé selon l'une quelconque des revendications 1 à 5, caractérisé en ce que la couche

0 172 082

intermédiaire et la matrice céramique sont déposées successivement par infiltration chimique en phase vapeur au sein d'une texture de renfort fibreux constituant une préforme maintenue dans un outillage.

7. Procédé selon l'une quelconque des revendications 1 à 4, caractérisé en ce que la matrice céramique est formée en tout ou partie par décomposition d'un composé liquide ou fusible imprégnant la texture de renfort fibreux préalablement revêtue de ladite couche intermédiaire.

8. Structure composite comportant une texture de renfort fibreux en matériau réfractaire, un revêtement intermédiaire formé sur les fibres de la texture de renfort et une matrice céramique autre qu'en carbone formée sur le revêtement intermédiaire, caractérisée en ce que le revêtement intermédiaire est constitué par une couche d'épaisseur comprise entre 0,2 et 3 micromètres, adhérant à la fois aux fibres de la texture de renfort et au matériau céramique de la matrice et formée en un matériau qui est élastiquement déformable au moins en cisaillement et qui présente un coefficient d'allongement à la rupture supérieur à celui du matériau céramique de la matrice, de sorte qu'une couche de liaison à caractère élastique est interposée entre les fibres de la texture de renfort et la matrice céramique.

9. Structure composite selon la revendication 8, caractérisée en ce que la couche de liaison intermédiaire est en un matériau choisi parmi le pyrocarbone laminaire et le nitrure de bore.

10. Structure composite selon l'une quelconque des revendications 8 et 9, caractérisée en ce que les fibres de la texture de renfort sont en un matériau réfractaire choisi parmi le carbone et le carbure de silicium.

11. Structure composite selon l'une quelconque des revendications 8 à 10, caractérisée en ce que la matrice est en carbure de silicium.

12. Structure composite selon l'une quelconque des revendications 8 à 11, caractérisée en ce que la matrice est en tout ou partie constituée par un matériau céramique formé par infiltration chimique en phase vapeur.

13. Structure composite selon l'une quelconque des revendications 8 à 11, caractérisée en ce que la matrice est en tout ou partie constituée par un matériau céramique formé par décomposition thermique d'un composé intermétallique liquide ou fusible.

## Claims

1. Process for making a composite material with refractory fibrous reinforcement and ceramic matrix other than in carbon, process of the type consisting in forming a reinforcing texture with fibers in a refractory material, forming on the fibers of the reinforcing texture, an intermediate coating obtained by · chemical vapor deposition, and thereafter forming the ceramics matrix by laying a ceramics material on the fibers of the texture coated with the intermediate layer, characterized in that :
- the intermediate coating is formed by depositing a thin intermediate layer of a material having an elongation at break which is greater than that of the ceramics material of the matrix and which is elastically deformable at least in shear, said intermediate layer being between 0.2 and 3 micrometers thick and adhering to the fibers of the reinforcing texture, and
- the matrix is formed by depositing on the intermediate layer a ceramics material obtained without any chemical reaction with the material of the intermediate layer, the ceramics material adhering to the intermediate layer, so that an intermediate bonding layer of an elastic nature is formed between the fibers and the matrix.

2. Process according to claim 1, characterized in that the intermediate layer is formed by chemical vapor deposition of a material selected from laminar pyrolytic carbon and boron nitride.

3. Process according to any one of claims 1 and 2, characterized in that the reinforcing texture is formed with fibers selected from the carbon fibers and silicon carbide fibers.

4. Process according to any one of claims 1 to 3, characterized in that the ceramics matrix is formed by silicon carbide.

5. Process according to any one of claims 1 to 4, characterized in that the ceramics matrix is formed by chemical vapor deposition of said ceramics material.

6. Process according to any one of claims 1 to 5, characterized in that the intermediate layer and the ceramics matrix are successively deposited by chemical vapor infiltration into a fibrous reinforcement texture constituting a preform held in a tool.

7. Process according to any one of claims 1 to 4, characterized in that the ceramics matrix is totally or partially formed by decomposition of a liquid or fusible compound impregnating the fibrous reinforcement coated beforehand with the said intermediate layer.

8. Composite structure comprising a fibrous reinforcing structure in refractory material, an intermediate coating formed on the fibers of the reinforcing texture and a ceramics matrix other than in carbon, formed on the intermediate coating, characterized in that the intermediate coating is constituted by a layer of thickness ranging between 0.2 and 3 micrometers, adhering to the fibers of the reinforcing structure as well as to the ceramics material of the matrix and formed in a material which is elastically deformable at least in shear, and which has a coefficient of elongation at break greater than that of the ceramics material of the matrix, so that a bonding layer of elastic nature is interposed between the fibers of the reinforcing structure and the ceramics matrix.

7

9. Composite structure according to claim 8, characterized in that the intermediate bonding layer is in a material selected from laminar pyrolytic carbon and boron nitride.

10. Composite structure according to any one of claims 8 and 9, characterized in that the fibers of reinforcing structure are in a refractory material selected from carbon and silicon carbide.

11. Composite structure according to any one of claims 8 to 10, characterized in that the matrix is in silicon carbide.

12. Composite structure according to any one of claims 8 to 11, characterized in that the matrix is totally or partially obtained by chemical vapor infiltration.

13. Composite structure according to any one of claims 8 to 11, characterized in that the matrix is totally or partially obtained by the thermal decomposition of a liquid or fusible compound.


**Patentansprüche**

1. Verfahren zur Herstellung eines Verbundkörpers mit feuerfester Faserverstärkung und keramischer Matrix aus einem anderen Material als Kohlenstoff, gemäß dem man ausgehend von Fasern eines feuerfesten Materials eine Verstärkungstextur bildet, auf den Fasern der Verstärkungstextur einen durch Ablagerung in der Dampfphase erhaltenen Zwischenbelag bildet und danach die keramische Matrix durch Aufbringen eines keramischen Materials auf die mit dem Zwischenbelag versehenen Fasern der Textur bildet, dadurch gekennzeichnet, daß

- der Zwischenbelag gebildet wird durch Ablagerung einer dünnen Zwischenschicht aus einem Material, das eine höhere Bruchdehnung als diejenige des keramischen Materials der Matrix hat und zumindest bei Abscherung elastisch verformbar ist, wobei die Zwischenschicht eine Dicke von 0,2 bis 3 μm aufweist und an den Fasern der Verstärkungstextur haftet, und

- die Matrix durch Ablagerung eines ohne chemische Reaktion mit dem Material der Zwischenschicht erhaltenen keramischen Materials auf die Zwischenschicht gebildet wird, wobei das keramische Material auf der Zwischenschicht haftet, so daß eine elastische Verbindungszwischenschicht zwischen den Fasern und der Matrix gebildet wird.

2. Verfahren nach Anspruch 1, dadurch gekennzeichnet, daß die Zwischenschicht durch chemische Ablagerung eines aus laminarem Pyrokohlenstoff oder Bornitrid bestehenden Materials in der Dampfphase gebildet wird.

3. Verfahren nach einem der Ansprüche 1 und 2, dadurch gekennzeichnet, daß die Verstärkungstextur aus Kohlenstoff- oder Siliziumkarbidfasern gebildet wird.

4. Verfahren nach einem der Ansprüche 1 bis 3, dadurch gekennzeichnet, daß die keramische Matrix aus Siliziumkarbid gebildet wird.

5. Verfahren nach einem der Ansprüche 1 bis 4, dadurch gekennzeichnet, daß die keramische Matrix durch chemische Ablagerung des keramischen Materials in der Dampfphase gebildet wird.

6. Verfahren nach einem der Ansprüche 1 bis 5, dadurch gekennzeichnet, daß die Zwischenschicht und die keramische Matrix nacheinander durch chemische Infiltration in der Dampfphase in einer faserverstärkten Textur abgelagert werden, die eine in einem Werkzeug gehaltene Vorform darstellt.

7. Verfahren nach einem der Ansprüche 1 bis 4, dadurch gekennzeichnet, daß die keramische Matrix ganz oder teilweise durch Zersetzung einer flüssigen oder schmelzbaren Verbindung gebildet wird, mit der die faserverstärkte Textur, die vorher mit der Zwischenschicht bedeckt wurde, imprägniert wird.

8. Verbundgefüge mit einer faserverstärkten Textur aus feuerfestem Material, einem auf den Fasern der Verstärkungstextur gebildeten Zwischenbelag und einer keramischen Matrix aus einem anderen Material als Kohlenstoff, die auf dem Zwischenbelag gebildet ist, dadurch gekennzeichnet, daß der Zwischenbelag aus einer Schicht mit einer Dicke von 0,2 bis 3 μm besteht, die gleichzeitig an den Fasern der Verstärkungstextur und am keramischen Material der Matrix haftet und aus einem Material besteht, das zumindest bei Abscherung elastisch verformbar ist und einen höheren Bruchdehnungskoeffizienten als das keramische Material der Matrix aufweist, so daß eine elastische Verbindungsschicht zwischen den Fasern der Verstärkungstextur und der keramischen Matrix eingefügt ist.

9. Verbundgefüge nach Anspruch 8, dadurch gekennzeichnet, daß die Verbindungszwischenschicht aus laminarem Pyrokohlenstoff oder aus Bornitrid besteht.

10. Verbundgefüge nach einem der Ansprüche 8 und 9, dadurch gekennzeichnet, daß die Fasern der Verstärkungstextur aus einem feuerfesten Material der Gruppe Kohlenstoff und Siliziumkarbid bestehen.

11. Verbundgefüge nach einem der Ansprüche 8 bis 10, dadurch gekennzeichnet, daß die Matrix aus Siliziumkarbid besteht.

12. Verbundgefüge nach einem der Ansprüche 8 bis 11, dadurch gekennzeichnet, daß die Matrix ganz oder teilweise aus einem keramischen Material besteht, das durch chemische Infiltration in der Dampfphase gebildet ist.

13. Verbundgefüge nach einem der Ansprüche 8 bis 11, dadurch gekennzeichnet, daß die Matrix ganz oder teilweise aus einem keramischen Material besteht, das durch thermische Zersetzung einer flüssigen oder schmelzbaren Verbindung gebildet ist.